# EUROPEAN PATENT APPLICATION

(11) **EP 2 711 857 A1**
(43) Date of publication of application: **26.03.2014**
(21) Application number: 13183331.1
(22) Date of filing: 06.09.2013
(51) Int. Cl.: G06F 17/50

(54) **Thermofluid simulation method and thermofluid simulation apparatus**

(30) Priority: 25.09.2012 JP 2012211470
(71) Applicant: FUJITSU LIMITED, Kawasaki-shi, Kanagawa 211-8588 (JP)
(72) Inventor: Kobayashi, Sachio, Kanagawa, 211-8588 (JP); Kobayashi, Hiroki, Kanagawa, 211-8588 (JP); Sasaki, Tomotake, Kanagawa, 211-8588 (JP); Ikeda, Hiroshi, Kanagawa, 211-8588 (JP); Umeda, Yuhei, Kanagawa, 211-8588 (JP)
(74) Representative: HOFFMANN EITLE

(57) **Abstract**

A thermofluid simulation method includes referring to a storage unit storing a simulation result corresponding to a predetermined analysis range including partial spaces set in a space subject to simulation, and a first reduced order model generated based on the simulation result, generating a second reduced order model derived from the simulation result thus referred to for an analysis range having an arrangement of partial spaces matching an arrangement of the partial spaces of the predetermined analysis range in the space subject to simulation, and storing the generated second reduced order model in the storage unit, and interpolating reduced order models among reduced order models stored in the storage unit based on a boundary condition to form a reduced order model group corresponding to variable ranges of the boundary condition, the reduced order model group including the first, and the second reduced order models.

## Description

### FIELD

The embodiments discussed herein are related to a thermofluid simulation method and a thermofluid simulation apparatus.

### BACKGROUND

In many years, attempts have been made to promote the efficiency of a thermal design for constructing server rooms or data centers that house servers and the like by detecting their internal heat distribution and airflow in advance utilizing thermofluid simulation. The thermofluid simulation in general includes time-dependent numerical simulation that includes setting time-dependent consecutive time steps, and repeatedly resolving (computing) the thermo-fluid equation for each of the time steps based on boundary conditions.

In the thermofluid simulation, a requirement of the high-resolution outcome may significantly increase the number of computational mesh nodes, which may eventually result in vast amounts of computing. The reason for the significant increase in the amounts of the computing may be the difficulty in acquiring a long interval between the time steps, and the high computational cost for resolving a differential equation (thermofluid equation) representing a state variation for each of the time steps, specifically, due to the Courant-Friedrichs-Lewy condition (CFL condition). Note that the CFL condition is a requirement for the computing of the computer simulation (numerical analysis) to make the speed of propagating information faster than the speed of propagating a wave or the physical quantity in an actual phenomenon.

Hence, an example of a simulation method utilizing reduced order models (ROMs) disclosed in a recent related-art computer graphics and animation technology has attracted much attention as a simulation method capable of exhibiting the high resolution and high speed propagation.

For example, when the ROM simulation is applied to the thermofluid simulation, the reduced order model (ROM) may represent the velocity field and the temperature field with the resolution expressed as the basis superposition computed as a result. The amount of computing in the ROM simulation is in proportion to the number of bases that is normally by far less than the number of computational mesh nodes. Note that the basis is represented by α1, α2, ...... αn when an arbitrary vector α in the vector space is expressed as α = a1α1+a2α2+...... anαn in n number of vector combinations α1, α2, ...... αn.

Hence, the thermofluid simulation is performed by utilizing the ROMs, and therefore a large amount of computing may be reduced while maintaining the thermofluid resolution.

### RELATED-ART DOCUMENT

### PATENT DOCUMENT

Patent Document 1: Japanese Laid-open Patent Publication No. 2007-179501

In the ROM simulation, a reduced order model group (ROM group) is constructed as pre-processing. The ROM group is a collection of reduced order models (ROMs) generated based on various conditions. The control condition indicates a certain setting of the boundary condition set in order to perform the thermofluid simulation. In order to express various control conditions in the ROM simulation, a ROM group may need to be generated for each of the control conditions. Further, in order to construct one ROM, several hours may normally be required for performing the thermofluid simulation in a certain control condition and further analyzing the result of the thermofluid simulation.

That is, when the ROM group is constructed as a pre-processing of the ROM simulation, a large amount of time may generally be required.

### SUMMARY

Accordingly, it is an object in at least one embodiment to provide thermofluid simulation method and apparatus, and non-transitory computer-readable storage medium, which may be capable of constructing a ROM group in a short period of time when the ROMs are utilized.

According to one aspect of the present invention, there is provided a thermofluid simulation method executed by a computer. The thermofluid simulation method includes referring to a storage unit storing a simulation result corresponding to a predetermined analysis range including a plurality of partial spaces set in a space subject to simulation, and a first reduced order model generated based on the simulation result; generating a second reduced order model derived from the simulation result thus referred to for an analysis range having an arrangement of partial spaces matching an arrangement of the partial spaces of the predetermined analysis range in the space subject to simulation, and storing the generated second reduced order model in the storage unit; and interpolating a plurality of reduced order models among reduced order models stored in the storage unit based on a boundary condition so as to form a reduced order model group corresponding to variable ranges of the boundary condition, the reduced order model group including the first, and the second reduced order models.

### BRIEF DESCRIPTION OF THE DRAWINGS

FIG. 1 is a diagram illustrating thermofluid simulation utilizing reduced order models (ROMs);
FIG. 2 is a diagram illustrating a hardware configuration example of a thermofluid simulation apparatus;
FIG. 3 is a diagram illustrating functionality of the thermofluid simulation apparatus;
FIGS. 4A and 4B are diagrams illustrating an outline of ROM generation;
FIG. 5 is a flowchart illustrating a ROM group formed by the thermofluid simulation apparatus;
FIG. 6 is a diagram illustrating a distinct module and a pre-analysis range;
FIG. 7 is a diagram illustrating an example of an object group;
FIG. 8 is a diagram illustrating representative points;
FIG. 9 is a flowchart illustrating a process of determining and adding the representative points;
FIG. 10 is a diagram illustrating an example of an analysis region for determining the representative points;
FIG. 11 is a diagram illustrating sampled points other than the representative points;
FIG. 12 is a diagram illustrating an example of a combined pattern of objects within each of the modules;
FIG. 13 is a diagram illustrating an example of combined patterns of modules; and
FIG. 14 is a diagram illustrating diversion of a ROM.

### DESCRIPTION OF EMBODIMENTS

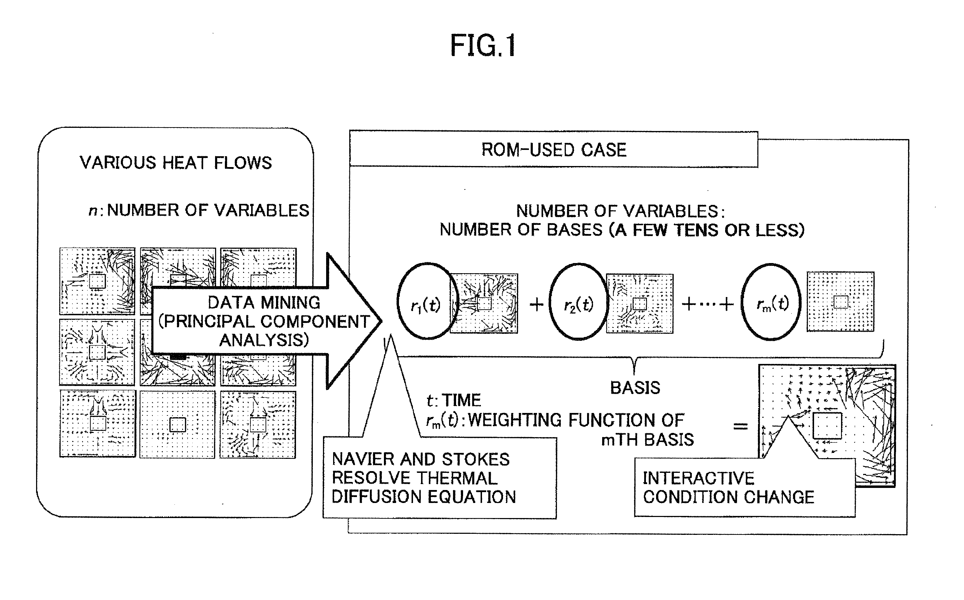

Preferred embodiments of the present invention will be described with reference to the accompanying drawings. FIG. 1 is a diagram illustrating thermofluid simulation utilizing reduced order models (ROMs). The ROMs in the thermofluid simulation represent the velocity field and the temperature field with the basis superposition. The thermofluid simulation employing the ROMs may initially perform construction of a group of ROMs (hereinafter referred to as a "ROM group") as pre-processing.

Each of the ROMs is a reduced order model (ROM) obtained by reducing the number of dimensions of an analysis model subject to analysis. The ROM is obtained by performing pre-simulation of various thermal flows, and storing plural velocity fields and temperature fields of the pre-simulation simulation results called "snapshots". Each of the snapshots is obtained at a certain time during the pre-simulation. Thereafter, the principal component analysis (PCA) is performed on the plural snapshots. As a result, a reduced order model (ROM) is generated. In this embodiment, a ROM group composed of a collection of ROMs may be constructed by performing the pre-simulation under various boundary conditions.

According to the embodiment, the thermofluid simulation is performed by utilizing the above-described ROM group. The thermofluid simulation is based on a differential equation that is a simultaneous equation of the Navier-Stokes equation and the heat advection diffusion equation representing a time-dependent change of heat.

In a case where the thermofluid simulation is performed by utilizing the ROM group, the number of variables is equal to the number of the bases. Hence, the computational amounts for performing the thermofluid simulation may significantly be reduced, which may shorten the time consumed for performing the thermofluid simulation. Thus, according to this embodiment, the simulation result may rapidly be obtained even though the boundary conditions are changed. As a result, it may be possible to achieve interactive thermofluid simulation.

In addition, according to this embodiment, the time consumed for performing the thermofluid simulation may be reduced by automatically constructing the ROM group in a short period of time. In the following, a description is given of the construction of the ROM group in a thermofluid simulation apparatus 100 according to the embodiment.

According to this embodiment, pre-simulation is performed only within a pre-analysis range that is a part of an analysis model. Hence, a construction time of the ROM group may be reduced by diverting the analysis result and interpolating the ROMs.

A description is given below of the thermofluid simulation apparatus 100 according to the embodiment.

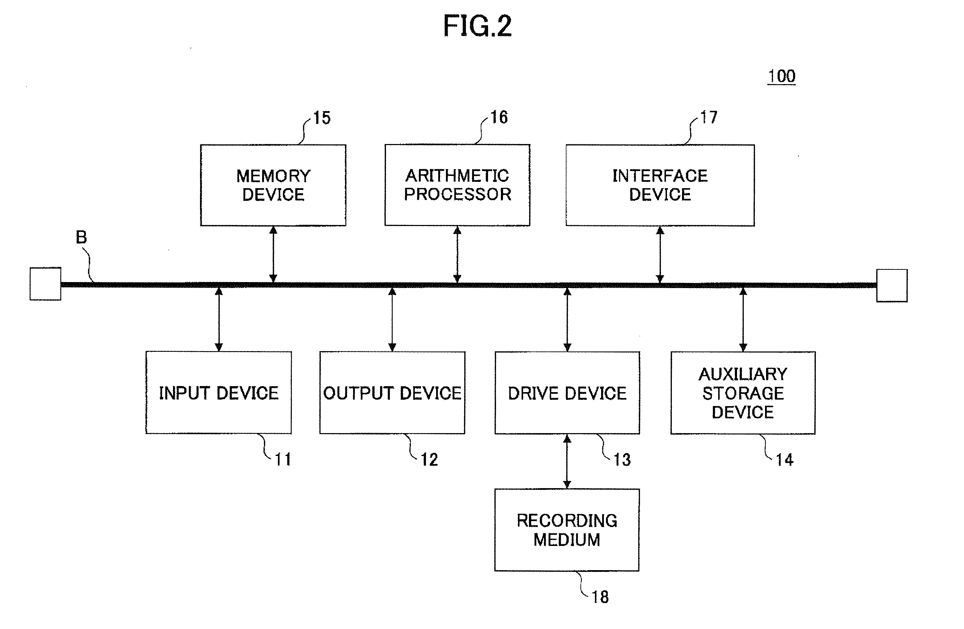

FIG. 2 is a diagram illustrating a hardware configuration example of a thermofluid simulation apparatus. As illustrated in FIG. 2, the thermofluid simulation apparatus 100 includes an input device 11, an output device 12, a drive device 13, an auxiliary storage device 14, a memory device 15, an arithmetic processor 16, and an interface device 17, which are connected to one another via a bus B.

The input device 11 includes a keyboard, a mouse, and the like configured to input various types of signals. The output device 12 includes a display device, and the like configured to display various types of windows, data, and the like. The interface device 17 includes a modem, a local area network (LAN) card, and the like configured to connect the thermofluid simulation apparatus 100 to a network.

The thermofluid simulation program according to an embodiment includes at least a part of various programs configured to control the thermofluid simulation apparatus 100. The thermofluid simulation program may, for example, be provided by the distribution of a non-transitory computer readable recording media 18 or obtained by downloading from the network. Note that the recording medium 18 storing the thermofluid simulation program may be various types of a recording medium including a recording medium optically, electrically or magnetically recording information such as a CD-ROM (compact disk read-only memory), a flexible disk, and a magneto-optical disk, or semiconductor memory or the like electrically recording information such as a ROM (read-only memory), a flash memory or the like.

When the recording medium 18 storing the thermofluid simulation program is set in the drive device 13, the thermofluid simulation program is installed in the auxiliary storage device 14 via the drive device 13. The thermofluid simulation program downloaded from the network is installed in the auxiliary storage device 14 via the interface device 17.

The thermofluid simulation apparatus 100 is configured to store the installed thermofluid simulation program, and necessary files and data. The memory device 15 is configured to retrieve thermofluid simulation program from the auxiliary storage device 14 at the startup of a computer and store the thermofluid simulation program. The arithmetic processor 16 is configured to implement the following various types of processing in accordance with the thermofluid simulation program stored in the memory device 15.

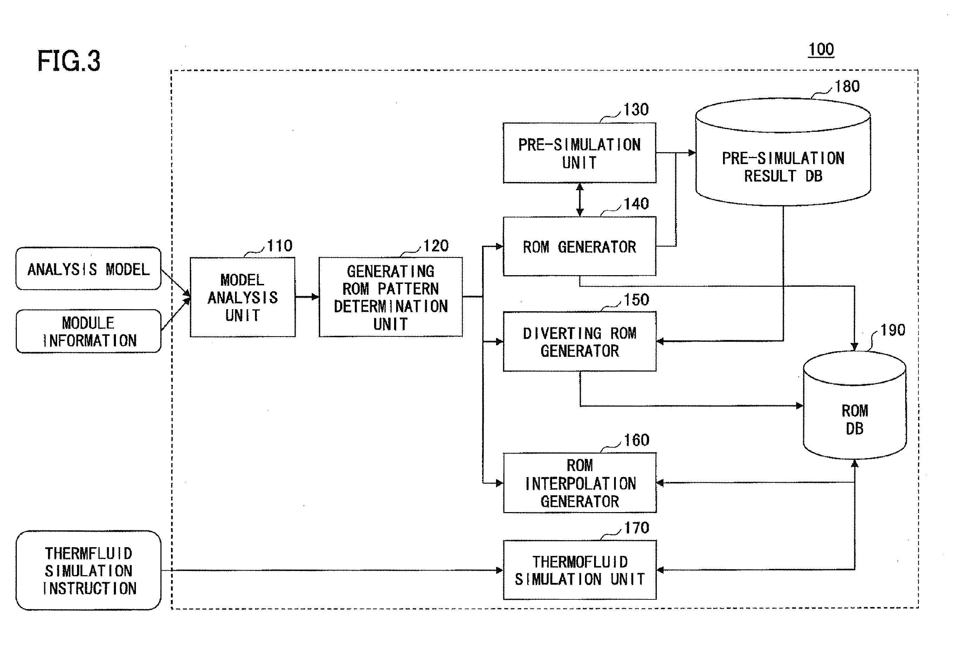

FIG. 3 is a diagram illustrating functionality of the thermofluid simulation apparatus 100 of the embodiment. The thermofluid simulation apparatus 100 of the embodiment includes a model analysis unit 110, a generating ROM pattern determination unit 120, a pre-simulation unit 130, a ROM generator 140, a diverting ROM generator 150, a ROM interpolation generator 160, and a thermofluid simulation unit 170. The thermofluid simulation apparatus 100 of the embodiment further includes a pre-simulation result database 180, and a ROM database 190. The pre-simulation result database 180 and the ROM database 190 may, for example, be provided in a predetermined area of the auxiliary storage device 14.

The model analysis unit 110 is configured to analyze an analysis model based on a previously given analysis model and module information. The analysis model is a typical thermofluid simulation model that includes a space subject to thermofluid simulation, objects disposed within the space, a physical constant, boundary conditions of heat or flows, a discretization model such as mesh, and analysis conditions. The analysis model of this embodiment may, for example, be an office space or the like having plural server racks having plural servers disposed therein, and fans. A module may be a partial space of a predetermined range within the analysis model determined by a user. Module information may, for example, include information specifying a module.

The model analysis unit 110 is configured to acquire, as a result of the analyzed analysis model, the pre-analysis range, a module pattern within the pre-analysis range, all the changeable boundary conditions for each of the modules, and variable ranges of the boundary conditions. The pre-analysis range is a range subject to the pre-simulation that is set in advance.

The generating ROM pattern determination unit 120 is configured to determine a reduced order model (ROM) pattern to be generated (hereinafter also called a "generating ROM pattern"). The ROM pattern to be generated is determined based on a pattern composed of the arrangement and types of modules included within the pre-analysis range. The pre-simulation unit 130 is configured to perform pre-simulation utilizing the ROM pattern determined by the generating ROM pattern determination unit 120. The pre-simulation indicates thermofluid simulation in a specified boundary condition. A result of the pre-simulation is stored in the pre-simulation result database 180. The details of the pre-simulation will be described later. The ROM generator 140 is configured to store, as a reduced order model (ROM), a result of a principal component analysis (PCA) performed on the pre-simulation result in the ROM database 190.

The diverting ROM generator 150 is configured to generate a ROM by diverting the pre-simulation result stored in the pre-simulation result database 180. The ROM generated by the diverting ROM generator 150 is stored in the ROM database 190. The ROM interpolation generator 160 is configured to dynamically generate ROMs for interpolating plural ROMs. The ROMs generated by the ROM interpolation generator 160 are also stored in the ROM database 190.

The ROM interpolation generator 160 may, for example, interpolate the ROMs by a technology known in the related art (e.g., disclosed in Non-patent Document: David Amsallem and Charbel Farhat (Stanford University), An Interpolation Method for Adapting Reduced-Order Models and Application to Aeroelasticity, American Institute of Aeronautics and Astronautics, 2008, vol.46, no7, pp.1803-1813). Note that the interpolation technology known in the related art is not limited to that disclosed in the above-described Non-patent Document, but may be any interpolation technology that is equivalent to the above-described Non-patent Document.

The thermofluid simulation unit 160 is configured to perform thermofluid simulation by utilizing a ROM group stored in the ROM database 190.

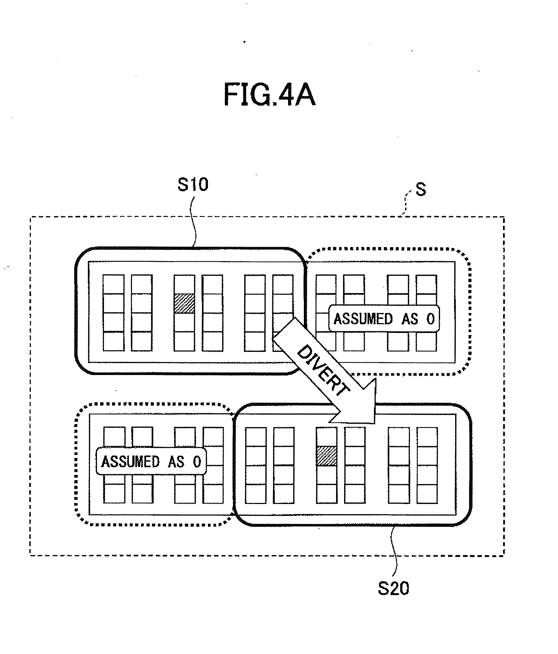

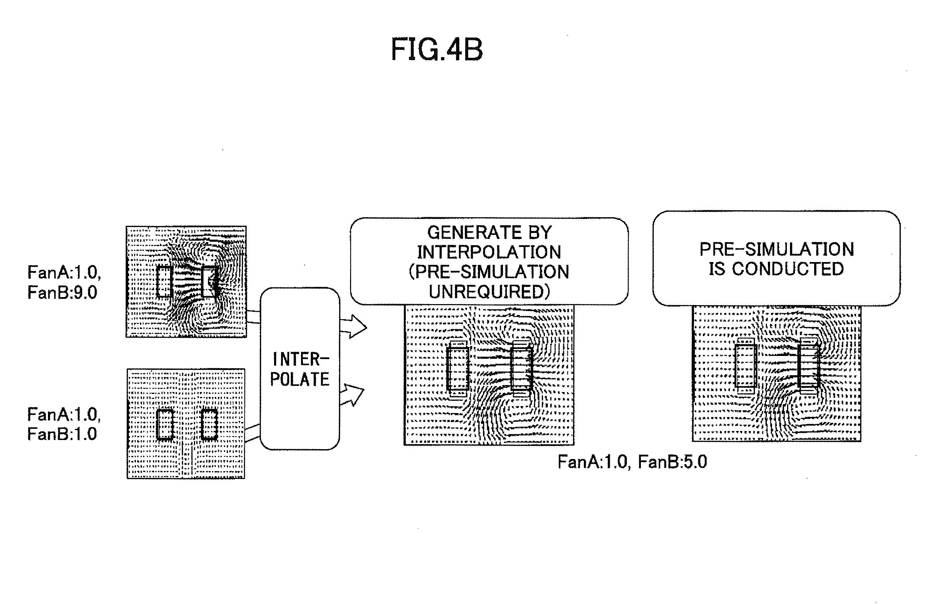

In the following, a description is given of an outline of the ROM generation. FIGS. 4A and 4B are diagrams illustrating the outline of the ROM generation. FIG. 4A is a diagram illustrating diversion of the pre-simulation and the pre-simulation result, and FIG. 4B is a diagram illustrating interpolation based on the pre-simulation result.

The thermofluid simulation apparatus 100 of the embodiment initially performs the pre-simulation within a pre-analysis range S10 that is a part of an analysis model space S (hereinafter simply called a "space S"), and then performs a principal component analysis (PCA) on the pre-simulation result to generate a reduced order model (ROM)(a first ROM). The pre-simulation indicates performing the thermofluid simulation on the pre-analysis range S10 by applying 0 to all the boundary conditions of the space S excluding the boundary conditions of the pre-analysis range S10.

When a ROM corresponding to the pre-analysis range S10 are generated, the generated ROM corresponding to the pre-analysis range S10 is diverted as a ROM corresponding to a pre-analysis range S20 having a module pattern the same as the module pattern of the pre-analysis range S10 in the space S (a second ROM).

Further, the thermofluid simulation apparatus 100 of the embodiment interpolates the ROM generated by the pre-simulation to generate ROMs so as to form a ROM group including the first, and the second ROMs to cover the space S.

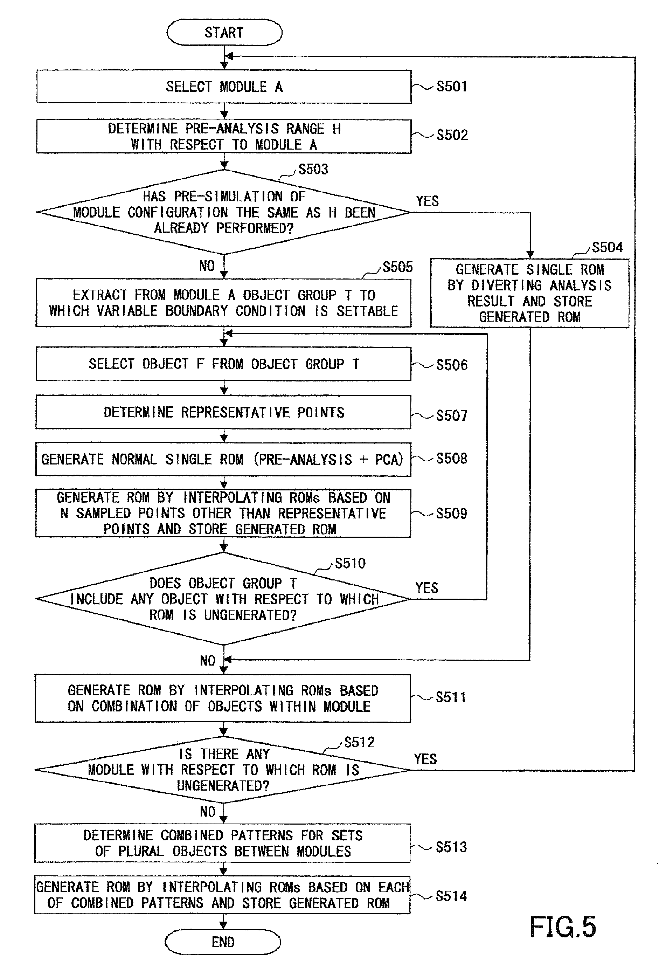

A description is given below of operations of the thermofluid simulation apparatus 100 according to the embodiment. FIG. 5 is a flowchart illustrating a ROM group formed by the thermofluid simulation apparatus 100.

In the thermofluid simulation apparatus 100 of the embodiment, the model analysis unit 110 divides an analysis model into plural modules based on the analysis model and module information, and selects a module A that is subject to the pre-simulation (step S501).

Subsequently, the model analysis unit 110 determines a pre-analysis range H with respect to the module A (step S502). The pre-analysis range H indicates a space including N modules (e.g., 1 to N^{th} modules) adjacent to a distinct module (e.g., a module A).

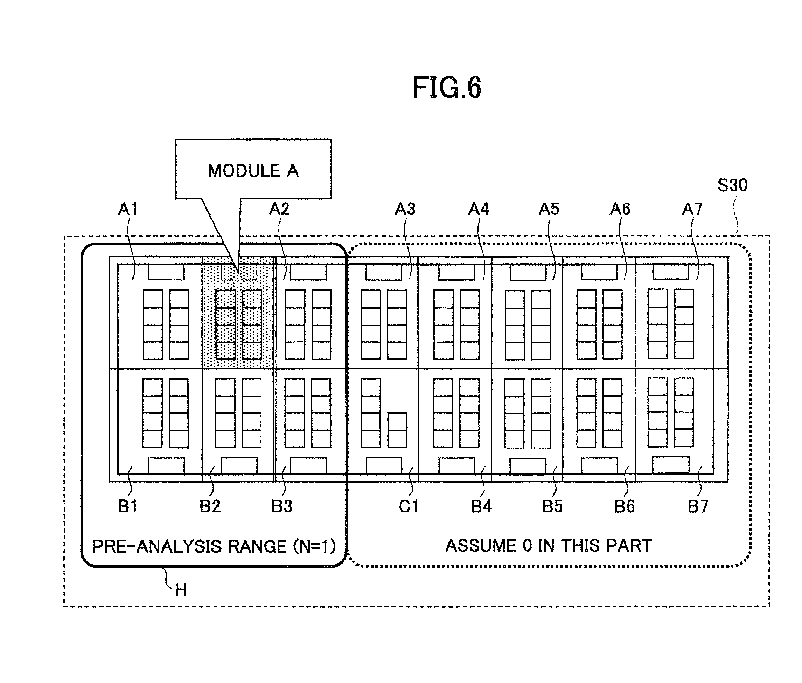

FIG. 6 is a diagram illustrating the distinct module and the pre-analysis range. A space 30 illustrated in FIG. 6 corresponds to a space subject to an analysis conducted by thermofluid simulation. The space S30 may, for example, be a server room or the like in which products of servers and cooling mechanisms for cooling the servers are arranged. The cooling mechanisms may, for example, be fans. In the example of FIG. 6, the space S30 is divided into 16 modules.

Further, in the example of FIG. 6, modules A1 to A7 represent the modules having arrangements of the server racks and fans similar to those of the server racks and fans of the module A. In addition, in this embodiment, modules B1 to B7 represent modules having the inverted arrangements of the server racks and fans of the module A, and a module C represents having arrangements of the server racks and fans other than those having the inverted arrangements.

The model analysis unit 110 of this embodiment selects the module A and determines "N = 1" as a value of N for determining the pre-analysis range H. In this embodiment, the pre-analysis range includes N modules adjacent to the module A. Hence, when N = 1, the pre-analysis range H includes the module A and five modules adjacent to the module A (see FIG. 6). Specifically, the pre-analysis range H of this embodiment includes the modules A, A1, A2 and the modules B1 to B3. Note that the value of N is set in advance.

Subsequently, the model analysis unit 110 determines whether a pre-simulation of a module configuration the same as the module configuration of the pre-analysis range H has already been performed (step S503). Specifically, the model analysis unit 110 determines whether a pre-simulation result of the corresponding pre-analysis range H has been stored in the pre-simulation result database 180. Note that since the thermofluid simulation apparatus 100 has not generated a ROM yet in the first loop at the initiation of a ROM group forming process illustrated in FIG. 5, the thermofluid simulation apparatus 100 proceeds with step S505.

When the corresponding pre-simulation result is present (found) in the pre-simulation result database 180 in step S503, the generating ROM pattern determination unit 120 causes the diverting ROM generator 150 to generate a ROM by diverting the corresponding pre-simulation result (step S504) (the second ROM). The ROM generated in step S504 is stored in the ROM database 190. The details of step S504 will be described later.

When the corresponding pre-simulation result is not present (is not found) in the pre-simulation result database 180 in step S503, the model analysis unit 110 extracts, from the module A, an object group T to which the boundary conditions are settable (step S505). The boundary conditions in this example indicate control statuses of the object group T including a position of the object group T, a temperature, a simulation condition, and a variable range of the object group T.

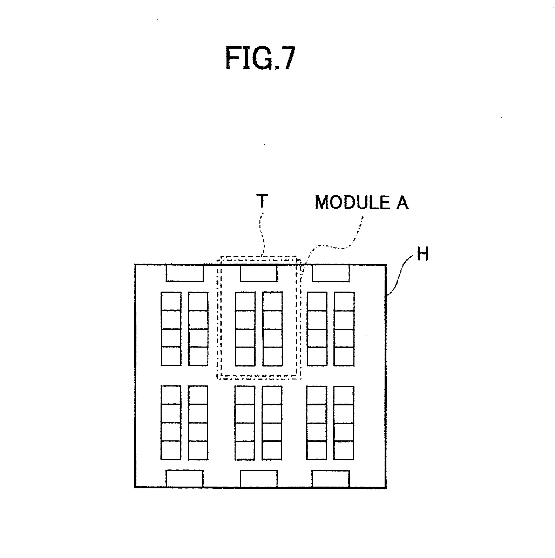

FIG. 7 is a diagram illustrating an example of an object group T. An object in the module A indicates a controllable object to which boundary conditions are set. Specifically, the object may be a fan or the like disposed in the module A. When the object is a fan, an operating status of the fan may be the boundary condition. For example, the operating status of the fan may include an ON/OFF status of the fan, or wind strength of the fan. The object group T in the module A illustrated in the example of FIG. 7 may be plural fans.

Subsequently, the model analysis unit 110 extracts an object F from the object group T (step S506).

Subsequently, the thermofluid simulation apparatus 100 causes the generating ROM pattern determination unit 120 to determine representative points for performing simulation (step S507). The representative points indicate specific parameters included in the boundary condition. The varying boundary condition has a predetermined range. In the present embodiment, a ROM is generated based on the specific parameters within the range of the boundary condition. The specific parameter in this case is called a "representative point".

Subsequently, the generating ROM pattern determination unit 120 causes the ROM generator 140 to generate a ROM of the pre-analysis range for every representative point (step S508). Specifically, the ROM generator 140 causes the pre-simulation unit 130 to perform thermofluid simulation for every representative point, and carries out a principal component analysis (PCA) on each of the obtained thermofluid simulation results. The pre-simulation unit 130 stores the thermofluid simulation results in the pre-simulation result database 180.

With respect to an object F of the module A, a ROM is generated by executing the process of step S508 based on each of the representative points, which are the specific parameters within a variable range of the boundary condition.

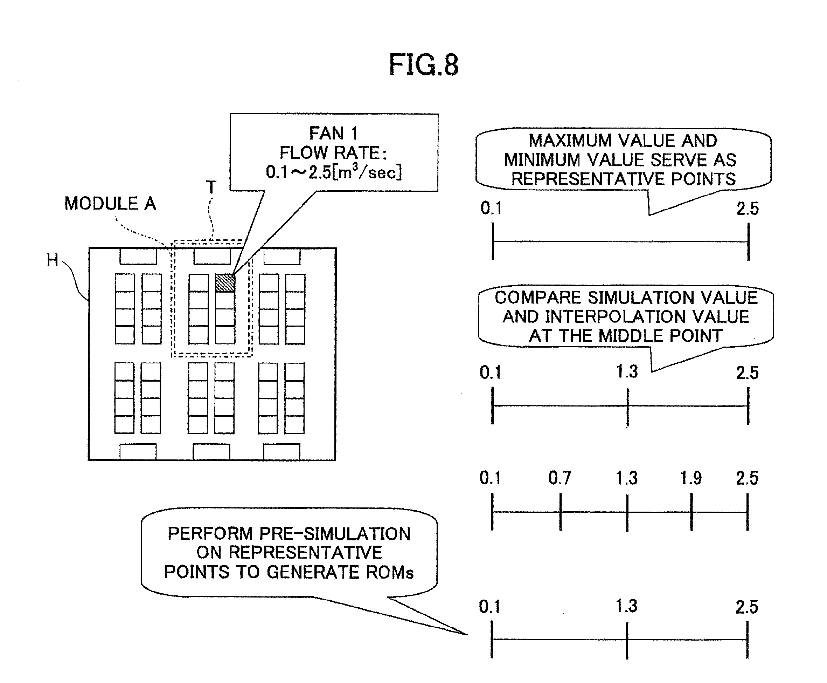

In the following, a description is given of details of the steps S506 to S508. FIG. 8 is a diagram illustrating representative points. In step S506, the model analysis unit 110 extracts a distinct object F from the object group T. In the example of FIG. 8, a fan 1 is selected as an object F. The settable flow rate range of the fan 1 is from 0.1 to 2.5 m³/sec.

In this embodiment, the maximum value and the minimum value of the settable flow rate range of the fan 1 may be selected as the representative points. For a representative point other than the maximum and the minimum values, simulation is performed on a partial region having the representative point peripheral to the distinct object F. Thereafter, the simulation result is compared with each of the interpolation generated stationary statuses, and when the error between the simulation result and a corresponding one of the interpolation generated stationary statuses is greater than a certain threshold, the corresponding simulation result is added as a representative point.

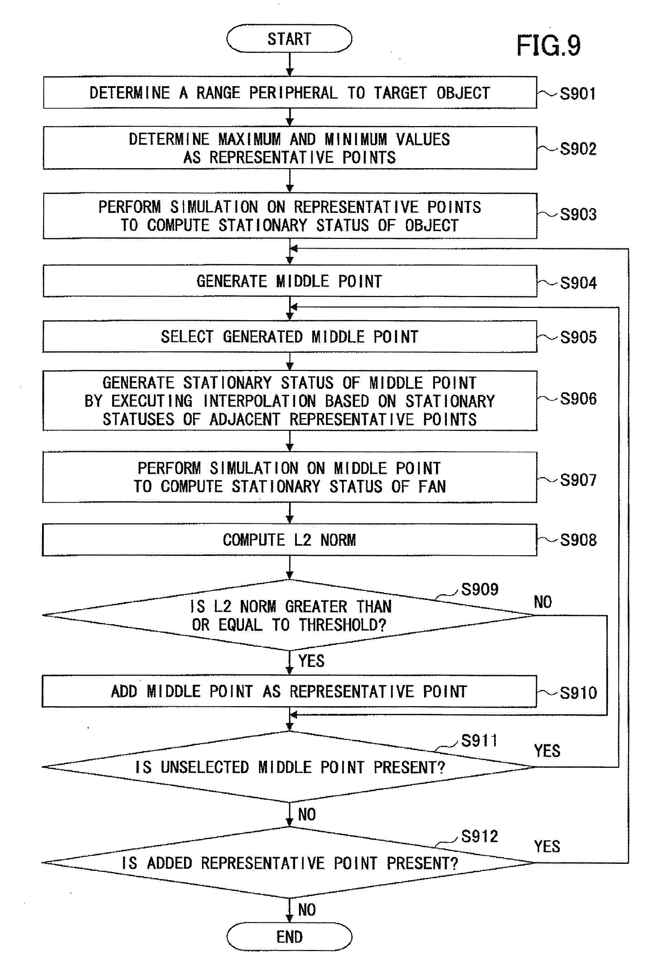

In the following, a description is given of a process of determining and adding the representative point. FIG. 9 is a flowchart illustrating a process of determining and adding the representative point. FIG. 9 is a flowchart illustrating details of the process in step S507.

The generating ROM pattern determination unit 120 of this embodiment determines an analysis region for determining representative points in the periphery of the selected object (step S901).

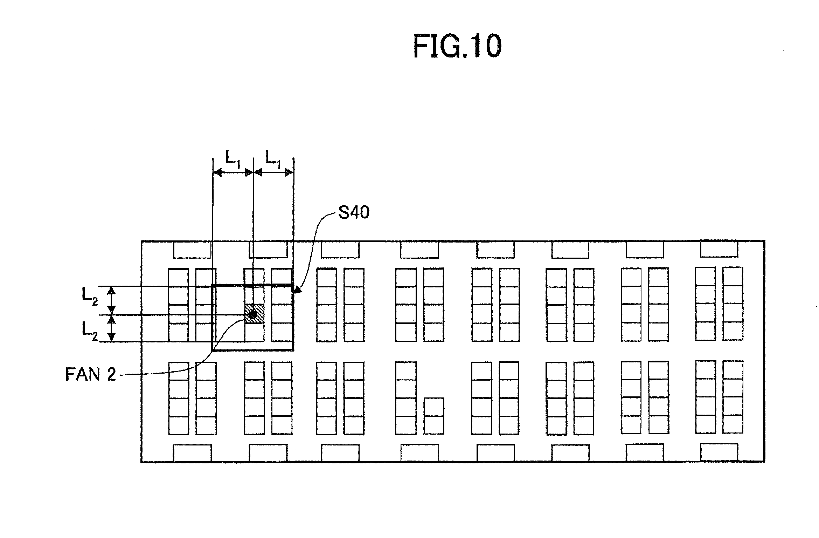

FIG. 10 is a diagram illustrating an example of an analysis region for determining the representative points. FIG. 10 illustrates a case in which a fan 2 is selected as a target object. The analysis region S40 for determining the representative points is determined as a region defined by 2L₁ × 2L₂ with respect to the fan 2 as a center. In this embodiment, the distance L₁ and the distance L₂ may be given in advance.

Referring back to FIG. 9, the generating ROM pattern determination unit 120 determines the maximum value and the minimum value of the settable flow rate range of the fan 1 as representative points (step S902). Subsequently, the generating ROM pattern determination unit 120 performs thermofluid simulation on the representative points to compute a stationary status of the fan 1 (step S903).

Subsequently, the generating ROM pattern determination unit 120 generates a middle point (step S904). The middle point indicates a middle value between the maximum value and the minimum value. Subsequently, the generating ROM pattern determination unit 120 selects the generated middle point (step S905). Subsequently, the generating ROM pattern determination unit 120 generates a stationary status of the middle point by executing interpolation based on the computed stationary statuses of the representative points adjacent to the middle point (i.e., the maximum value and minimum value) (step S906). Subsequently, the generating ROM pattern determination unit 120 performs thermofluid simulation on the middle point to compute a stationary status of the fan 1 (step S907).

Subsequently, the generating ROM pattern determination unit 120 computes an L₂ norm based on the computed result of step S906 and the computed result of step S907 (step S908). The L₂ norm indicates an index to compute a spatial error.

Subsequently, the generating ROM pattern determination unit 120 determines whether the L₂ norm is greater than or equal to a predetermined threshold (step S909). In step S909, when the L₂ norm is greater than or equal to the threshold, the generating ROM pattern determination unit 120 adds the middle point as a representative point (step S910). When the L₂ norm is less than the threshold, the generating ROM pattern determination unit 120 proceeds with the later-described step S911. The L₂ norm being greater than or equal to the predetermined threshold indicates that an error between the thermofluid simulation result based on the middle point and the interpolated result exceeds an acceptable range. In this case, the middle point is added to as a representative point.

Subsequently, the generating ROM pattern determination unit 120 determines whether there is an unselected middle point (step S911). When the unselected middle point is present in step S911, the generating ROM pattern determination unit 120 proceeds with step S905 (back to step S905). When the unselected middle point is not present in step S911, the generating ROM pattern determination unit 120 determines whether the added representative point (i.e., the middle point) is present (step S912). When the added representative point is present in step S912, the generating ROM pattern determination unit 120 proceeds with step S904 (back to step S904). When the added representative point is not present in step S912, the representative determining and adding process ends.

Referring back to FIG. 5, the generating ROM pattern determination unit 120 causes the ROM interpolation generator 160 to generate a ROM by interpolating ROMs based on N sampled points other than the representative points (step S509). The ROMs generated in step S509 are stored in the ROM database 190. The N sampled points other than the representative points may be preset points obtained, for example, by dividing an interval between the two representative points into three. Note that in this embodiment, it is not necessary to carry out step S509.

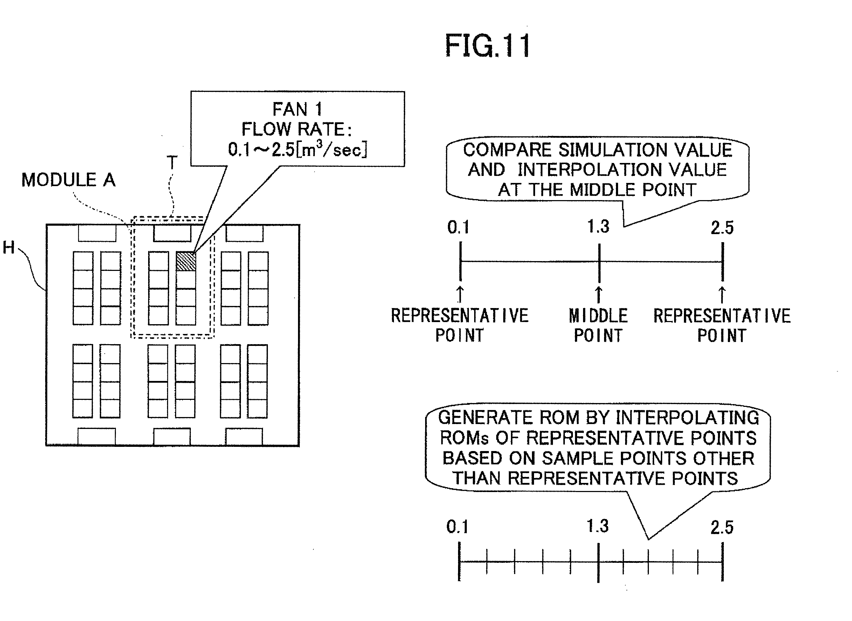

FIG. 11 is a diagram illustrating sampled points other than the representative points.

In the example of FIG. 11, the maximum value and the minimum value of the settable flow rate range of the fan 1 may be determined as the representative points, and a ROM may be generated by interpolating the ROMs based on the sampled points obtained by dividing an interval between the two representative points into ten.

Subsequently, the generating ROM pattern determination unit 120 determines whether an object group T includes an object F with respect to which a ROM is ungenerated (step S510).

When the object group T includes the object F with respect to which a ROM is ungenerated in step S510, the generating ROM pattern determination unit 120 proceeds with step S506 (back to step S506). When the object group T includes no object F with respect to which a ROM is ungenerated in step S510, the generating ROM pattern determination unit 120 determines combinations of control statuses (boundary conditions) for the plural objects F in the module A. The ROM interpolation generator 160 generates a ROM by interpolating the ROMs based on each of the determined combinations of the control statuses (boundary conditions) (step S511). The ROMs generated in step S511 are stored in the ROM database 190.

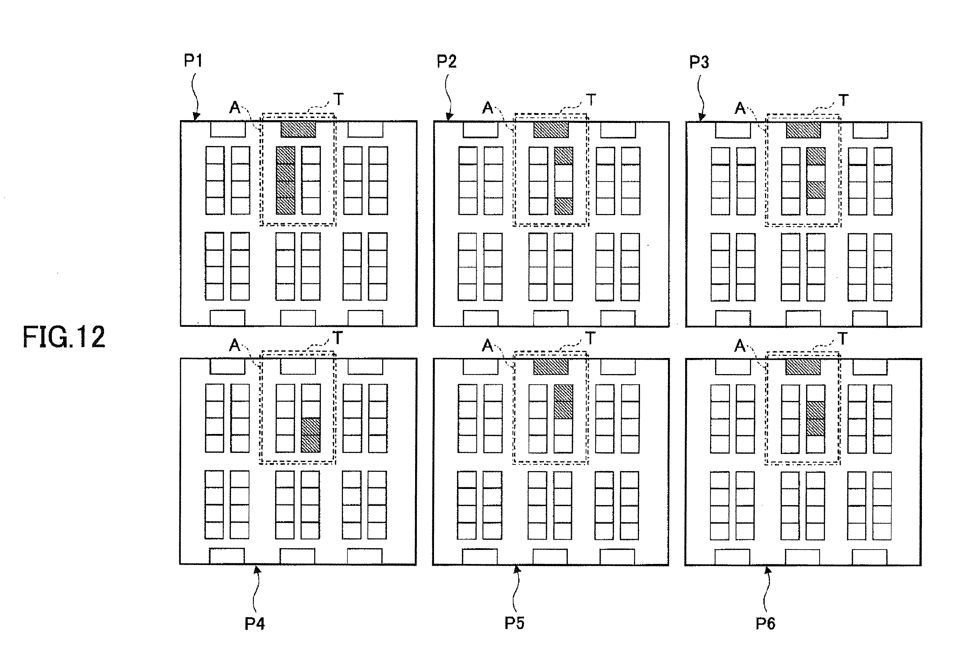

FIG. 12 is a diagram illustrating an example of a combined pattern of plural objects within each of the modules. FIG. 12 illustrates a pattern (the combined pattern) of the objects that are turned ON in the object group T within each of the modules.

For example, a pattern P1 in FIG. 12 illustrates a case where five objects out of nine included in the object group T are turned ON. Note that the objects in FIG. 12 may, for example, be fans, and the like. Patterns P2 to P6 are respective cases in which two or three objects out of nine in the object group T located at different positions are turned ON.

The ROM interpolation generator 160 may, for example, generate a ROM for each of statuses of the patterns P1 to P6 by performing interpolation based on a corresponding one of the combinations of the control statuses of the objects F in the modules A.

Subsequently, the generating ROM pattern determination unit 120 determines whether the space subject to an analysis includes any module with respect to which a ROM is ungenerated (step S512). When the space subject to an analysis includes a module with respect to which a ROM is ungenerated in step S512, the generating ROM pattern determination unit 120 proceeds with step S501 (back to step S501). When the space subject to an analysis includes no module with respect to which a ROM is ungenerated in step S512, the generating ROM pattern determination unit 120 determines combined patterns of the control statuses (boundary conditions) for the plural objects F between the modules within the pre-analysis range H (step S513). Specifically, the generating ROM pattern determination unit 120 determines combined patterns of the modules within the pre-analysis range H. In this embodiment, when the combined patterns of the modules are determined, combinations of sets of the plural objects F between the modules are determined. In this embodiment, the above-described processes may generate a ROM group of the pre-analysis range corresponding to the variable ranges of the boundary conditions in the space S30.

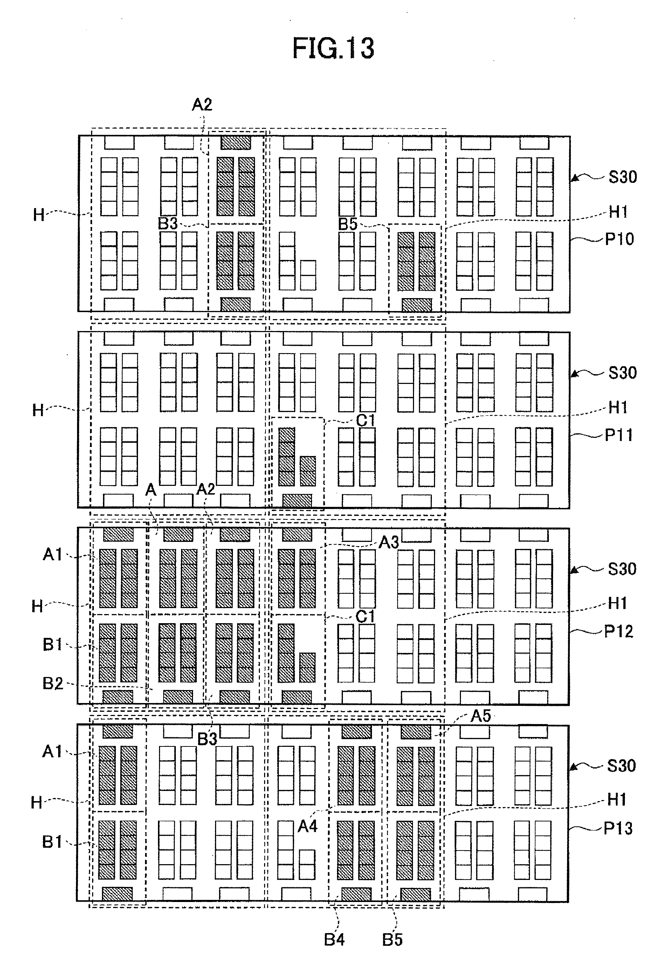

FIG. 13 is a diagram illustrating an example of combined patterns of the modules. A pattern P10 in FIG. 13 illustrates a case where all the objects in the module A2 and all the objects in a module B3 are turned ON in the pre-analysis space (i.e., the pre-analysis range) H, and all the objects in a module B5 are turned ON in a pre-analysis space H1. Further, a pattern P11 illustrates a case where all the objects in a module C1 are turned ON in the pre-analysis space H1 within the space S30. A pattern P12 illustrates a case where all the objects in the modules A, A1 to A3, B1 to B3 are turned ON in the pre-analysis space H, and all the objects in a module C1 are turned ON in the pre-analysis space H1. A pattern P13 illustrates a case where all the objects in the modules A1 and B1 are turned ON in the pre-analysis space H, and all the objects in the modules A4, A5, B4, and B5 are turned ON in the pre-analysis space H1.

The generating ROM pattern determination unit 120 determines all the possible modules and combined patterns of and objects in the space S30 other than those combined patterns illustrated in FIG. 13.

Subsequently, the generating ROM pattern determination unit 120 causes the ROM interpolation generator 160 to generate a ROM by interpolating the ROMs of the representative points based on each of the combined patterns of the objects (step S514). The ROM interpolation generator 160 stores the generated ROM in the ROM database 190, and terminates the generating process of the ROM group of the analysis model.

In the following, a description will be given of a process in step S504. When a thermofluid simulation apparatus 100 has already executed the pre-simulation of a module configuration similar to the module configuration of the pre-analysis range H, the thermofluid simulation apparatus 100 causes the diverting ROM generator 150 to generate a ROM by diverting the pre-simulation result.

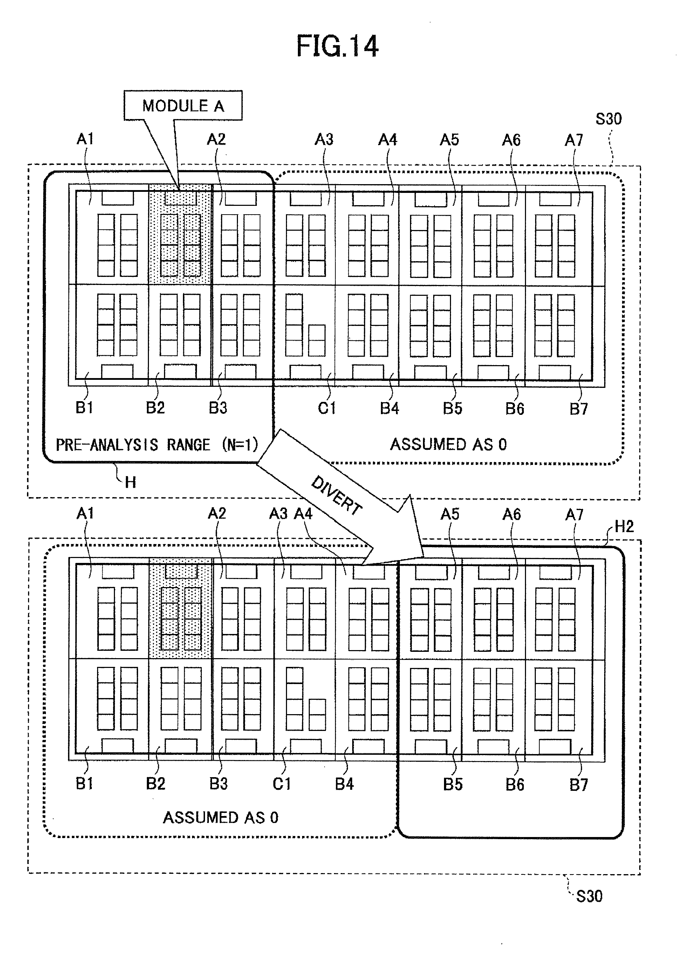

FIG. 14 is a diagram illustrating diversion of a ROM. The module configuration of the pre-analysis range H includes the module A, the modules A1 and A2 having an object group arrangement the same as that of the module A, and the modules B1, B2, and B3 having an inverted object group arrangement of that of the module A.

In the space S30 illustrated in FIG. 14, a range H2 includes a module configuration similar to that of the pre-analysis range H. The range H2 includes modules A5, A6, and A7 having an object group arrangement similar to that of the module A, and modules B5, B6, and B7 having an inverted object arrangement of that of the module A.

Hence, the thermofluid simulation apparatus 100 of the embodiment diverts the pre-simulation result of the pre-analysis range H as the pre-simulation result of the range H2 in step S504. Specifically, the generating ROM pattern determination unit 120 causes the diverting ROM generator 150 to acquire the pre-simulation result of the pre-analysis range H from the pre-simulation result database 180. Subsequently, the diverting ROM generator 150 diverts the pre-simulation result of the pre-analysis range H to the range H2 by applying parameters or the like indicating a position of the range H2 to the acquired pre-simulation result. Then the diverting ROM generator 150 performs a principal component analysis (PCA) on the diverted result of the presimulation of the pre-analysis range H to generate a ROM of the range H2, and stores the generated ROM of the range H2 in the ROM database 190.

As described above, according to the embodiment, a ROM group is generated based on a concept of linear-superposition by the following process including three steps.

The first step includes determining representative points in a case where a control status is changed with respect to one object in the pre-analysis range within the space subject to thermofluid simulation, and performing presimulation and a principal component analysis (PCA) on each of the representative points to generate a ROM for a corresponding one of the representative points (the first ROM). The second step includes representing each of the pre-analysis ranges by a module combination, and diverting the ROM executed in the first step as a ROM having a module combination of the pre-analysis range the same as that of the pre-analysis range of the ROM executed in the first step (the second ROM). The third step includes generating a ROM by interpolating the ROMs generated based on the representative points, as a ROM generated based on the middle point between the two representative points, or as a ROM having a module combination of the pre-analysis range differing from that of the pre-analysis range of the ROM executed in the first step.

The above-described processes may be implemented as respective functions of an apparatus, implemented as a program executed by a computer, and implemented as a program stored in a non-transitory computer-readable storage medium.

As described above, the number of times the pre-simulation is performed may be reduced by means of diverting the principal component analysis results of the pre-simulation results and interpolation of the ROMs. Hence, the processing time consumed for generating the ROM group may be shortened.

For example, a case where 10 air conditioners and 85 fans capable of switching flow rate in three steps are disposed in the space S30 is considered. In this case, the number of control status patterns at a certain time may be calculated as 3⁸⁵ = 3.6 × 10⁴⁰. This indicates that a vast amount of time may be required for performing the pre-simulation for all the control status patterns.

By contrast, according to the present embodiment, the number of control status patterns required for the pre-simulation may be reduced down to 3 × 85. Hence, according to the present embodiment, the ROM group of the analysis model may be constructed automatically in a short period of time. Hence, the time necessary for executing thermofluid simulation may be shortened and interactive thermofluid simulation may be implemented.

Note that the present embodiment employs thermofluid simulation utilizing ROMs, however, the present embodiment is not limited to the thermofluid simulation employing thermofluid simulation utilizing ROMs. The present embodiment may be diverted to physical simulation utilizing ROMs other than those of the thermofluid simulation.

According to the embodiment, the ROM group may be constructed in a short period of time when the ROMs are used.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority or inferiority of the invention. Although the embodiments of the present invention have been described in detail, it should be understood that the various changes, substitutions, and alterations could be made hereto without departing from the spirit and scope of the invention.

## Claims

1. A thermofluid simulation method executed by a computer, the thermofluid simulation method **characterized by**:
referring to a storage unit storing a simulation result corresponding to a predetermined analysis range including a plurality of partial spaces set in a space subject to simulation, and a first reduced order model generated based on the simulation result;
generating a second reduced order model derived from the simulation result thus referred to for an analysis range having an arrangement of partial spaces matching an arrangement of the partial spaces of the predetermined analysis range in the space subject to simulation, and storing the generated second reduced order model in the storage unit; and
interpolating a plurality of reduced order models among reduced order models stored in the storage unit based on a boundary condition so as to form a reduced order model group corresponding to variable ranges of the boundary condition, the reduced order model group including the first, and the second reduced order models.

2. The thermofluid simulation method as claimed in claim 1,
**characterized in that** a plurality of controllable objects are disposed in each of the partial spaces, a boundary condition being set for each of the controllable objects,
the thermofluid simulation method further **characterized by**:
determining combined patterns of the boundary conditions set for the controllable objects in each of the partial spaces; and
generating reduced order models by interpolating the reduced order models stored in the storage unit such that each of the boundary conditions of the reduced order models stored in the storage unit is adapted to a corresponding one of the combined patterns.

3. The thermofluid simulation method as claimed in claim 2, further **characterized by**:
determining arrangement patterns of the partial spaces included in the predetermined analysis space; and
generating reduced order models by interpolating the reduced order models stored in the storage unit such that each of the boundary conditions of the reduced order models stored in the storage unit is adapted to a corresponding one of the arrangement patterns.

4. The thermofluid simulation method as claimed in claim 2 or 3, further **characterized by**:
changing setting of the boundary condition for each of the controllable objects, and performing thermofluid simulation to generate the first reduced order model for a corresponding one of the boundary conditions.

5. The thermofluid simulation method as claimed in any one of claims 1 to 4, further **characterized by**:
determining a maximum value and a minimum value of a value set as the boundary condition as respective representative points, and performing thermofluid simulation to generate the first reduced order model for each of the representative points; and
generating a reduced order model by interpolating the boundary condition of the first reduced order model for a corresponding one of the representative points.

6. A thermofluid simulation apparatus **characterized by**:
a storage unit configured to store a simulation result corresponding to a predetermined analysis range including a plurality of partial spaces set in a space subject to simulation, and a first reduced order model generated based on the simulation result;
a generator configured to generate a second reduced order model derived from the simulation result thus referred to for an analysis range having an arrangement of partial spaces matching an arrangement of the partial spaces of the predetermined analysis range set the space subject to simulation, and store the generated second reduced order model in the storage unit; and
an interpolation generator configured to interpolate a plurality of reduced order models among reduced order models stored in the storage unit based on a boundary condition so as to form a reduced order model group corresponding to variable ranges of the boundary condition, the reduced order model group including the first and the second reduced order models.

7. The thermofluid simulation apparatus as claimed in claim 6, further **characterized by**:
a reduced order model generator configured to set the boundary condition for each of controllable objects, and perform thermofluid simulation to generate the first reduced order model for a corresponding one of the boundary conditions.

8. A non-transitory computer-readable storage medium that stores a program which, when executed by a computer, causes the computer to perform a process **characterized by**:
referring to a storage unit storing a simulation result corresponding to a predetermined analysis range including a plurality of partial spaces set in a space subject to simulation, and a first reduced order model generated based on the simulation result;
generating a second reduced order model derived from the simulation result thus referred to for an analysis range having an arrangement of partial spaces matching an arrangement of the partial spaces of the predetermined analysis range in the space subject to simulation, and storing the generated second reduced order model in the storage unit; and
interpolating a plurality of reduced order models among reduced order models stored in the storage unit based on a boundary condition so as to form a reduced order model group corresponding to variable ranges of the boundary condition, the reduced order model group including the first, and the second reduced order models.
